# EUROPEAN PATENT APPLICATION

(11) **EP 0 917 355 A1**
(43) Date of publication of application: **19.05.1999**
(21) Application number: 97120003.5
(22) Date of filing: 14.11.1997
(51) Int. Cl.: H04N 5/00

(54) **Distribution of MPEG-2 transport streams on the IEEE 1394-based home network**

(71) Applicant: Sony International (Europe) GmbH, 50829 Köln (DE)
(72) Inventor: Szucs, Paul, c/o Sony Inter. (Europe) GmbH, 70736 Fellbach (DE); Veltman, Markus, c/o Sony Inter. (Europe) GmbH, 70736 Fellbach (DE); Buchner, Peter, c/o Sony Inter. (Europe) GmbH, 70736 Fellbach (DE)
(74) Representative: Müller, Frithjof E., Dipl.-Ing.

(57) **Abstract**

Many types of consumer equipment will be connected to each other digitally in the home network, using e.g. the IEEE 1394 serial bus. Protocols and content data formates have already been fixed for the connection of digital video-conference cameras to the PC, and for DVC equipment for example digital camcorder and DV deck to a PC editing station. The transmission of complete MPEG-2 transport streams on a home network is mostly a waste of bandwidth, since not all included services need to be distributed. This invention provides a universally applicable solution for the distribution of partial MPEG-2 transport streams in the home network, e.g. the i.LINK/IEEE 1394 home network.

## Description

This invention is concerned with a method to distribute MPEG-2 transport streams on a network and an interface device for distributing MPEG-2 transport streams on a network. In particular, the invention is related to a method and an interface device to distribute partial MPEG-2 transport streams on a network.

Many types of consumer equipment will be connected to each other digitally in the home network, i.e. using the IEEE 1394 serial bus. Protocols and content data formats have already been fixed for the connection of digital video-conference cameras to the PC and for DVC equipment, for example digital camcorder and DV deck to a PC editing station.

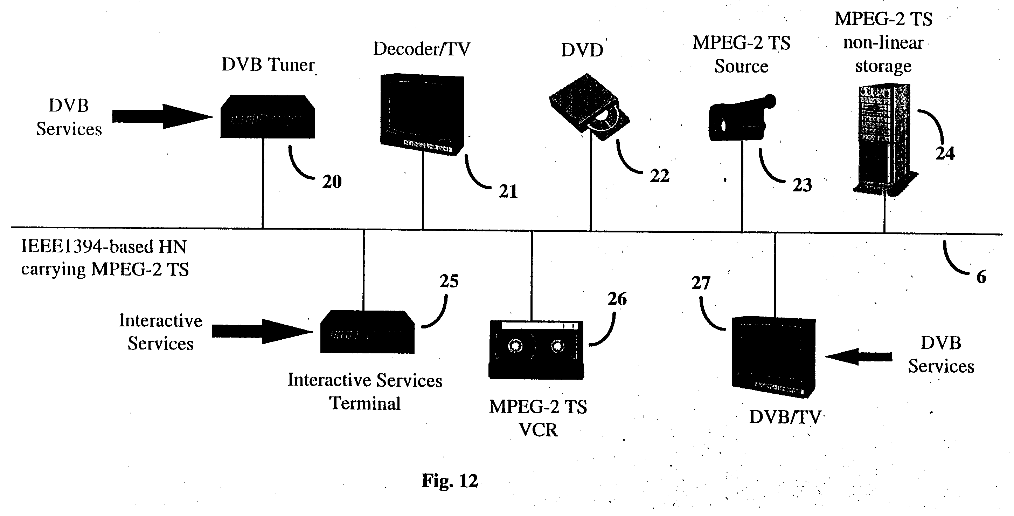

The transmission of an MPEG-2 transport stream in the home network will be the result of one device requesting such a stream from another device which is capable of providing such a stream. An example of a home network environment for the distribution of MPEG-2 transport streams is shown in Figure 12. This figure shows an IEEE 1394-based home network that can carry MPEG-2 transport streams and comprises a bus system 6 having different devices connected thereto. Via this network a decoder/display device 21 is able to request a stream corresponding to a TV service from a DVB tuner 20 which is able to receive DVB services. The stream provided will be a complete transport stream with full service information, SI, as defined by DVB.

On the other hand, the DVB receiver will mostly not be required to pass on the complete transport stream for distribution on the home network. A display device can only ever view one service at any time and the data rate capacity of a storage device, like an MPEG-2 transport stream VCR 26 or an MPEG-2 transport stream non-linear storage system 24, will usually be well below the data rate of the complete transport stream. Therefore, according to the prior art, bandwidth on the bus system 6 of the IEEE 1394-based home network Is wasted.

Therefore, it is the object of the present invention to provide a method to distribute MPEG-2 transport streams on a network that carry only selected services, i.e. to provide a method to distribute MPEG-2 partial transport streams on a network.

Furtheron, it is the object of the present invention to provide an interface device for generating and distributing such MPEG-2 partial transport streams on a network.

These objects are respectively achieved as defined in the independent claims 1, 8 and 13.

Further preferred embodiments of the invention are defined in the respective subclaims.

According to the present invention, a DVB receiver is able to generate a new transport stream, i.e. a partial transport stream, which contains only a subset of the incoming data, but which also conforms to MPEG-2 systems and DVB service information. Since this newly generated partial transport streams conform to MPEG-2 systems and DVB service information, i.e. are again MPEG-2 transport streams, they can be distributed in any network or processed by any device that has the capability to handle MPEG-2 transport streams.

The protocols required to regulate the supply of MPEG-2 transport stream services on the home network are not the subject of this invention. This invention is also not concerned with issues like user excess, service selection conflicts, e.g. to users request services from the same broadcast medium but on different multiplexes, etc. Whatever protocols are used, this invention applies to the content format of the IEEE 1394 isochronous channel that is used as an example in the preferred embodiments described hereinafter.

If a tuner device 20 is able to support more than one concurrent connection, it could provide the data for each connection in a separate isochronous channel In an IEEE 1394-based home network 6. More likely, however, is that a tuner device 20 would provide the bitstreams associated with the A/V services on a single isochronous channel. The content and bandwidth requirement of this channel would be adapted according to the requirements of other home network devices which receive the A/V services from the tuner 20.

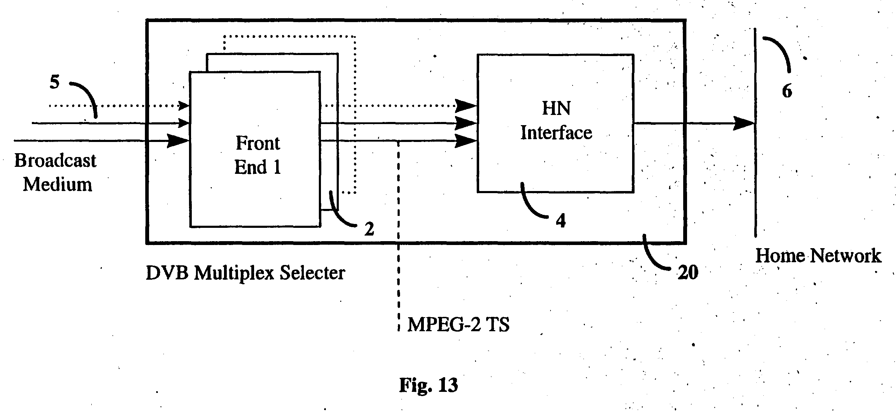

An example of such a DVB tuner 20 is shown in Figure 13. It consists of one or more front end modules 2, e.g. one for cable, one for terrestrial and one for satellite reception, that receive information from a respective broadcast medium 5, carry out the medium specific demodulation and forward error correction, FEC, recovery process and respectively generate complete MPEG-2 transport streams which typically contain several AV services, respectively. These MPEG-2 transport streams are delivered to a home network interface 4 that outputs complete transport stream multiplexes to the home network 6. The shown DVB tuner 20 is not able to process the transport stream data content.

The invention also supports such tuner devices 20 that either distribute only selected services in each separate isochronous channel or that provide all requested services, and only those, in one single isochronous channel.

The present invention will become apparent and its numerous modifications and advantages will be better understood from the following detailed description of embodiments of the invention taken in conjunction with the accompanying drawings, wherein
- **Figure 1**: shows a block diagram of a DVB service selector according to the present invention;
- **Figure 2**: shows the partial transport stream generation process according to the present invention;
- **Figure 3**: shows in detail the generation of a new program association table, PAT, for the partial transport stream;
- **Figure 4**: shows in detail the generation of a new program map table PMT, for the partial transport stream;
- **Figure 5**: shows in detail the generation of the selection information table SIT;
- **Figure 6**: shows the stages of the partial transport stream generation;
- **Figure 7**: shows a block diagram of a transport stream processor used in the service selector shown in Figure 1;
- **Figure 8**: shows a block diagram of a combined DVB service selector/decoder according to the present invention;
- **Figure 9**: shows a block diagram of a DVB player according to the present invention;
- **Figure 10**: shows the block diagram of the transport stream generator used in the DVB player shown in Figure 9;
- **Figure 11**: shows a block diagram of a home network transport stream processor according to the present invention;
- **Figure 12**: shows one home network environment for MPEG-2 transport streams; and
- **Figure 13**: shows a DVB multiplex selector block diagram according to the prior art.

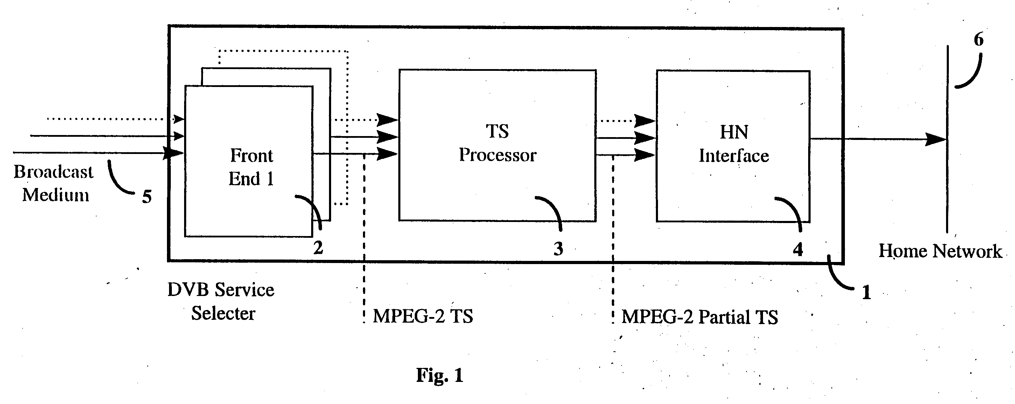

Figure 1 shows a DVB tuner device 1 according to the present invention, which is able to select one or more services from each of its front end modules 2, i.e. tuner modules, and to distribute these to other devices on the home network 6. In order to do this, the tuner device 1 can generate valid partial transport stream(s) with a transport stream processor 3 that is connected to all front end modules 2. These partial transport streams are than fed to a home network interface 4 that delivers them to the home network 6, like in the prior art. The transport stream processor 3 can either combine several services from the incoming MPEG-2 transport streams into one valid MPEG-2 partial transport stream or into separate ones. This process is described in detail below.

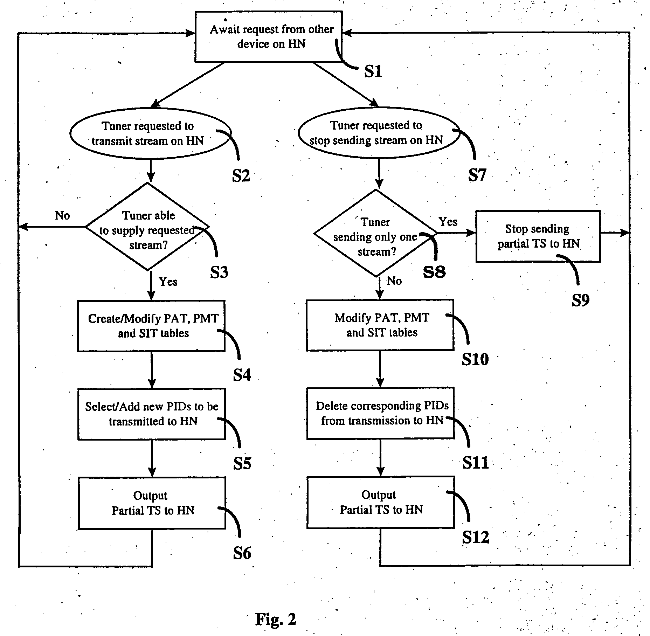

Figure 2 shows the partial transport stream generation process performed in the transport stream processor 3. In a step S1 the transport stream processor 3 awaits requests from another device on the home network 6. Such requests could be to transmit a stream of data belonging to selected services on the home network 6 or to stop sending such a stream. Of course, it is also possible that there is a request just to modify the content of a stream already transmitted on the home network. This case equals to the request to transmit a stream on the home network, now with a modified content.

If the transport stream processor 3 receives such a request to transmit (or to modify) a stream on the home network, which is decided in step S2, the process flow will be set forth in step S3. In step S3 it is validated if the tuner device 1 is able to supply the requested stream. In case of "no" the process returns to step S1 and the transport stream processor 3 will again await the request from another device on the home network. If, on the other hand, it is decided in step S3 that the tuner device 1 is able to supply the requested stream, i.e. "yes", the process continues in step S4 in which the program association table, PAT, the program map table, PMT, and the selection information table, SIT, are created in case of a new stream to be transmitted or modified in case of an existing stream to be transmitted with changed content. Thereafter, in step S5, new packet identifiers, PID, that identify each component stream, i.e. packets of data, that should be transmitted on the home network are selected or added. Then, in a step S6, the generated partial transport streams will be output to the home network. Once this process has been initiated in step S6, it will be continued until the transport stream processor 3 receives a request to stop sending this stream or to modify this stream. Therefore, after step S6, the process will be continued with step S1 in which the transport stream processor 3 waits for the request from the same or another device on the home network.

If in step S1 a request is received to stop sending a stream on the home network, this gets validated in step S7. Thereafter, in step S8 the transport stream processor 3 checks if only one stream is supplied to the home network or not. If it is the case that only one stream is supplied to the home network, i.e. "yes", the process continues with step S9 in which the sending of the partial transport stream to the home network is stopped. Thereafter, the process is set forth in step S1. If, on the other hand it is determined in step S8 that more than one stream is supplied to the home network, i.e. the answer of the question in step S8 is "no", the PAT, PMT and SIT tables are modified in step S10 to not contain the reference to the data packets belonging to the selected services anymore. Following thereto, the corresponding PIDs are deleted from the transmission to the home network in step S11. Then, in step S12, the modified partial transport stream excluding the stream that should not be sent anymore is output to the home network. The process flow continues then again with step S1.

In the following an example will be given of when a DVB receiver is requested to output one service, e.g. service 1, from the incoming multiplex to the home network. The transport stream processor 3 analyzes the PAT, PMT, the service description table, SDT, and the event information table, EIT, the latter two being a part of the service information, SI, in order to extract the relevant information about the current event in service 1.

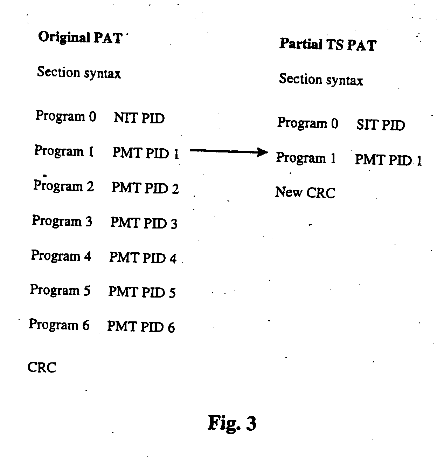

Furtheron, the PAT must be modified so that it references only to the services being passed through to the home network, in this case service 1. Figure 3 shows the mapping of the received PAT to the new PAT for the partial transport stream. In Figure 3 it can be seen that in the original PAT first a section syntax is transmitted, which is followed by programs 0 to 6 and a checksum of a cyclic redundancy check CRC. In program 0 the network information table PID is transmitted. Programs 1 to 6 respectively transmit the respective program map table PIDs 1 to 6. The generated partial transport stream PAT, on the other hand, contains only a section syntax, programs 0 and 1 and a new calculated checksum of the cyclic redundancy check CRC. Program 0 contains the PID of a selection information table, SIT, that is a table to subsitute the full SI data for recording a partial transport stream that does not include all services. Program 1 contains like in the original PAT the program map table PMT PID 1.

It can be seen that the modified PAT has one component copied from the original PAT, namely the content of program 1 and, on the other hand, several components that are newly generated, namely the section syntax, the PID of the service information table on program 0 and the new checksum of the cyclic redundancy check CRC.

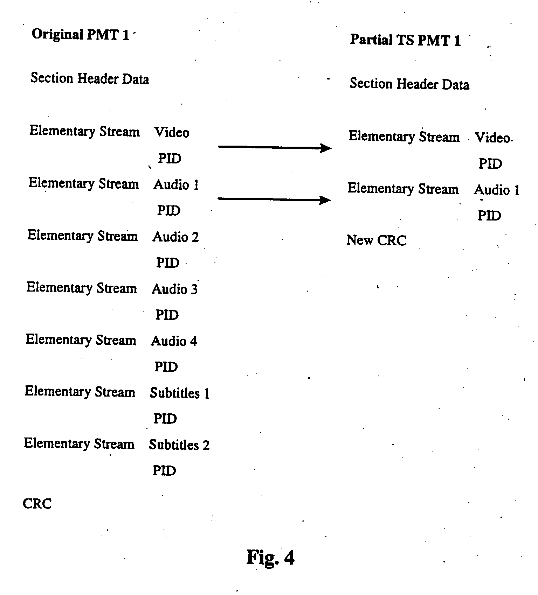

The modified PMT refers only to those component streams of service 1 which are being passed through. Figure 4 shows the mapping of the received PMT for service 1, containing reference to multiple audio component streams, to the new PMT for the partial transport stream, which will contain only one audio stream component, here Audio 1. It can be seen that the original PMT 1 comprises a section header data, an elementary stream video PID, elementary streams audio 1 to 4 PIDs, elementary stream subtitles 1 PID and elementary stream subtitles 2 PID and a checksum of a cyclic redundancy check CRC. The partial transport stream PMT 1 only comprises the section header data, the elementary stream video PID, the elementary stream audio 1 PID and a newly calculated checksum of the cyclic redundancy check CRC. Like in case of the PAT some contents are copied from the original PMT 1, like the elementary stream video PID and the elementary stream audio 1 PID, and some contents are newly generated like the section header data and the checksum of the cyclic redundancy check.

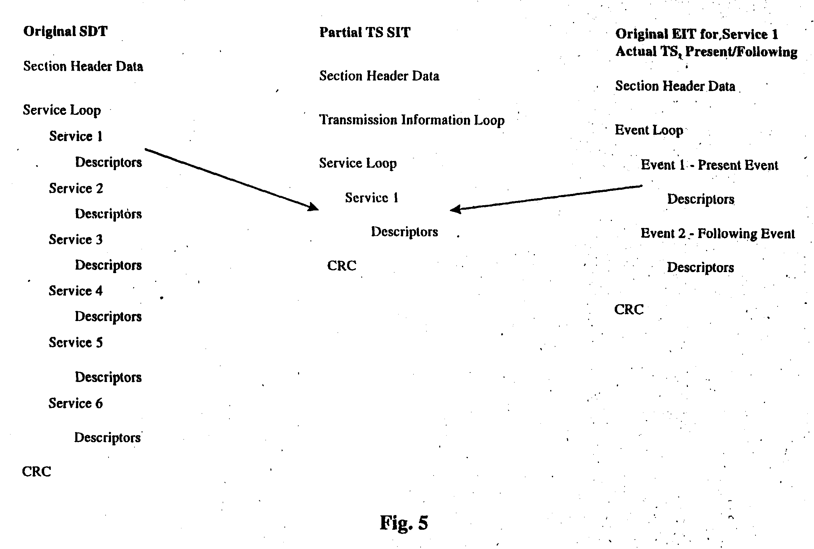

The newly generated SIT table will contain information extracted from the SDT and EIT for the current event of service 1 only. Figure 5 shows the mapping of the incoming SDT and EIT tables for the service to the generated SIT.

It is shown that the original SDT comprises section header data, a service loop that comprises descriptors of services 1 to 6, and a checksum of a cyclic redundancy check CRC. The original EIT for service 1 in the actual transport stream, present/following comprises section header data, and an event loop comprising event 1 which shows the description of the present event and event 2 which shows the descriptors of the following event, and a checksum of a cyclic redundancy check CRC. The newly generated partial transport stream SIT, on the other hand, comprises newly generated section header data, a newly generated transmission information loop, a service loop which shows the copied descriptors of service 1, and a newly calculated checksum of cyclic redundancy check CRC. Copied from the event loop of the original SDT and the original EIT is only the content of the newly generated service loop. All other contents of the newly generated partial transport stream SIT are newly generated.

During output of the partial transport stream, the task of the transport stream processor 3 consists of two functions:
- Filter the complete transport stream for the required PID packets for the partial transport stream; and
- Insert the new PSI/SI tables into the partial transport stream at the required intervalls.

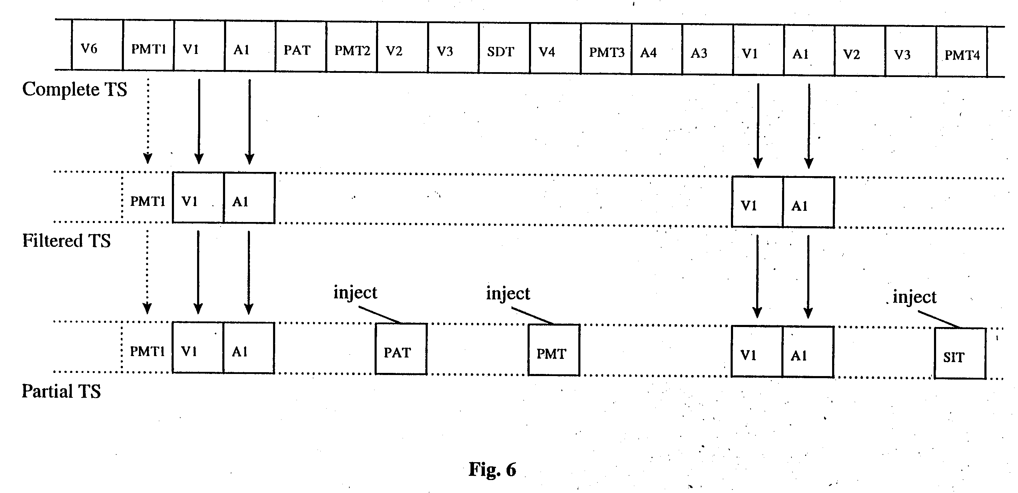

Figure 6 shows an example of the complete transport stream, the filtered transport stream and the newly generated partial transport stream. The complete transport stream consists of blocks one following the other that carry different kinds of information. In the shown example a V6 (video block of program 6) is followed by a PMT1 table (program map table referencing to service 1), a V1 block (video block belonging to service 1), an A1 block (audio block belonging to service 1), a PAT, a PMT2, etc. The filtered transport stream only consists of the V1 and A1 blocks. In case the whole service 1 is included in the filtered transport stream, also the PMT1 block can be included therein. The newly generated partial transport stream is based on the filtered transport stream and additionally comprises the newly generated and injected PAT, PMT and SIT tables.

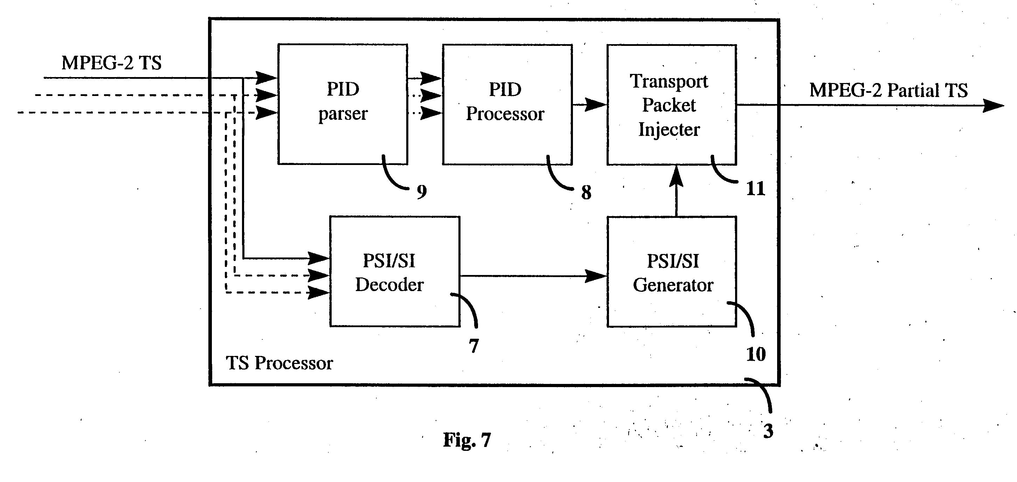

The block diagram of the transport stream processor 3 is shown in Figure 7. The transport stream processor 3 consists of a PID parser 9 which receives the incoming MPEG-2 transport stream(s) and which filters the respective transport streams. In the output of the PID parser 9 is input to a PID processor 8 that is used to combine several incoming MPEG-2 transport streams in the case of several incoming MPEG-2 transport streams and then to secure that the same PID does not exist twice for different services on the newly generated transport stream. The output(s) of the PID processor 8 is/are led to a transport packet injecter 11 which serves to finally generate one or more partial transport streams by injecting the newly generated PAT, PMT and SIT tables and to output one or more MPEG-2 partial transport streams. To generate the new tables the transport stream processor 3 comprises a PSI/SI decoder 7 also receiving all incoming MPEG-2 transport stream(s) that extracts the relevant information from the incoming PSI/SI tables and effects the relevant information to a PSI/SI generator 10 that generates the new tables in the above described manner and feeds them to the transport packet injecter 11.

The incoming services are carried by the broadcasting medium, which could be satellite, cable, terrestrial or other. The front end blocks 2 of the DVB service selector 1 carry out the medium specific demodulation and foreward error correction, FEC, recovery processes. They each output a complete MPEG-2 transport stream, which typically contains several AV services. These complete MPEG-2 transport streams are received by the TS processor 3. Here, the PSI/SI decoder 7 analyses the PAT, PMT and the STT and EIT tables from the SI in order to extract the relevant information about the currently selected event, e.g. of service 1. The PID parser 9, on the other hand, is set up to let through only those transport packets belonging to the selected service, e.g. to service 1, which consists of video packets V1 and audio packets A1. All other transport packets are blocked, leaving time gaps in the filtered transport stream. Under certain circumstances, i.e. when all component streams of service 1 are being passed onto the home network, then the PMT of service 1, PMT1, can also be passed through without modification.

The new PSI/SI tables are generated by the PSI/SI generator block 10 and passed onto the transport packet injecter 11, which stores the tables. When an insertion of any table into the partial transport stream is necessary, as governed by the required repetition rate defined by MPEG-2 systems and DVB-SI, the table is enclosed in transport packets, which are inserted into the gaps of the filtered transport stream. When the next insertion is necessary, the transport packet injecter 11 only has to increment the continuity counter of the respective transport packets, without changing the transport packet payload.

The PSI/SI decoder 7 continues to monitor the incoming PSI and SI data relevant to the service being transmitted on the home network. If an event transmission occurs and the control software has not been told to stop sending the current service to the home network, this is communicated to the control software, which updates the PSI and SI tables to be inserted into the partial transport stream accordingly. It applies the usual version numbering mechanism as detailed in ETS 300468 in order to notify the home network receiver device of the change in contents.

As a result of a user action at any device in the home network, the tuner device 1 may accept a request to send out a second service to the home network simultaneously to the first service. It is immaterial whether the second service is bound for the same target home network device, say a VCR which is able to record both services concurrently, or if the second service was requested by a different device, for example another display or VCR. In both cases the tuner 1 will add the additional service to the stream in the same isocronous channel, without interrupting the original service.

In order to now send both services to the home network, the tuner updates the partial transport stream by generating new versions of PAT, PMT and SIT, corresponding to the two services now appearing on the home network. The version numbers of each table are incremented to signify to the first receiving device that the partial transport stream has been changed. These new tables are sent to the packet injecter 11. The service fed to the first receiving device has not changed, so its transmission is in no way interrupted. The additional PIDs transmitted are communicated to the PID parser 9 and the new two-program partial transport stream is transmitted to the home network.

Any number of services can be added to the partial transport stream in this way. The number is limited only by the bandwidth available on the home network, and the capability of the tuner to supply the additional requested service on top of the existing ones. An example when the tuner may not be able to do so is when a second service is requested which is available on a different cable channel to the one currently been received, and only one cable front end 2 is present in the tuner.

If the tuner has more than one front ent module 2 and it is requested to provide a partial transport stream containing services from different front end modules 2, it is possible that a conflict will occur with PID values and/or program _ number/service _ ID values. If it is able to do so, the tuner must modify conflicting values before including the new stream and the partial transport stream being output to the home network. Besides the combination of the several streams, this is also the task of the PID processor 8.

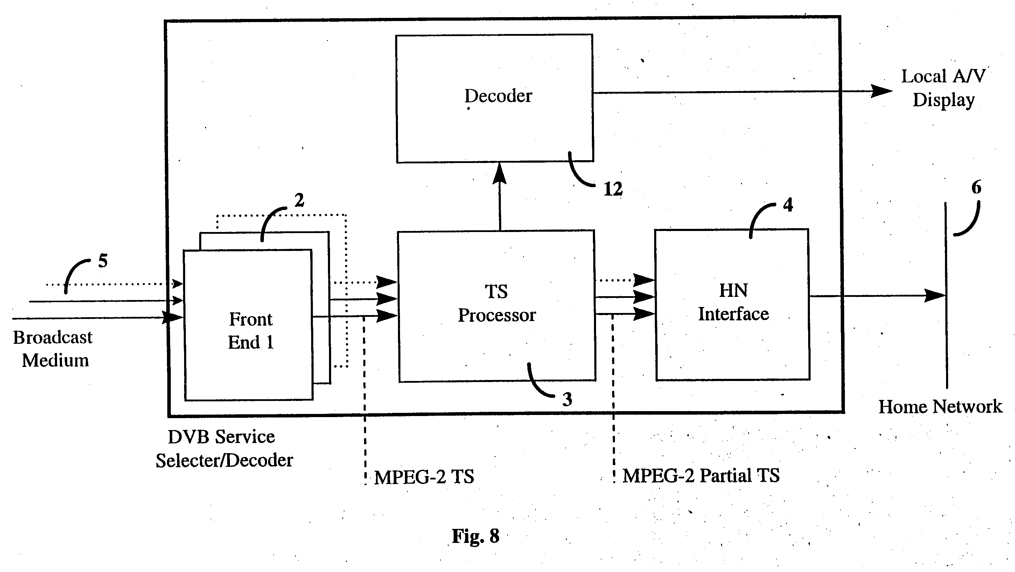

Figure 8 shows the DVB service selector 1 combined with local decoding. As well as provided transport streams on the home network, the user is able to select a service to watch on a locally connected display device, e.g. an analog TV display. The provision of stream(s) on the home network continues in the background, independently of the locally received service, as far as possible. This type of device is analoguous to a conventional DVB STB, with the home network functionality added.

The local decoding is done by a decoder 12 which is supplied with information from the transport stream processor 3 and which outputs its decoding result to a local A/V display. The transport stream processor 3 has now the additional task to divert a special selected service to the decoder 12. This task is performed by the PID parser 9.

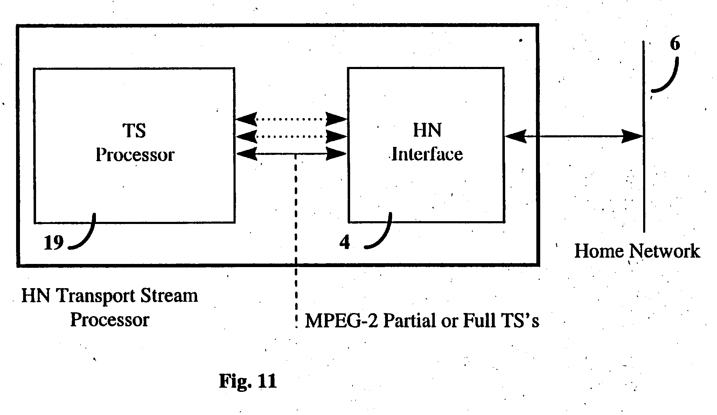

Figure 11 shows a different kind of transport stream manipulation device, namely one which has no broadcast medium input, but only a home network interface 4, This home network interface 4 has a bidirectional coupling to the home network 6. Furtheron, it is bidirectionally coupled to a transport stream processor 19. The whole device provides the ability to process transport streams which are already appearing on an isocronous channel in the home network 6. This could mean demultiplexing a full transport stream and outputting the required partial transport stream back to the home network 6 in a different isocronous channel, or providing trans-formating services for devices delivering MPEG A/V data in different forms, e.g. program or elementary streams.

Of course, device implementations could incorporate more than one or all of the device concepts shown before.

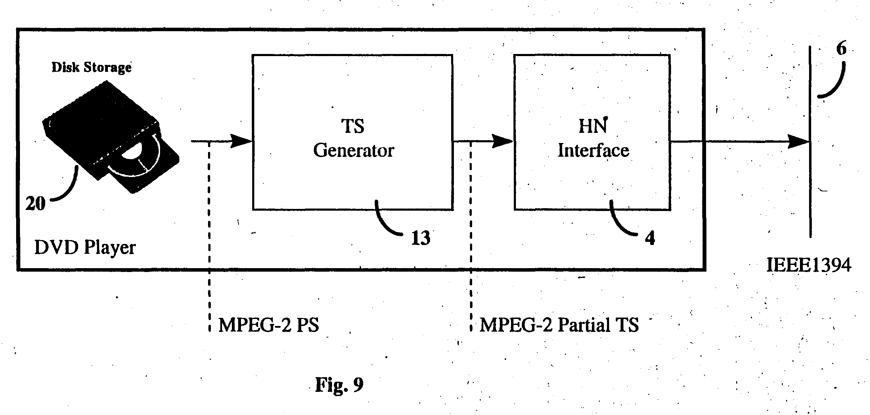

Figure 9 shows a block diagram of a possible DVD player to be connected to a home network, e.g. an IEEE 1394 home network 6. It comprises a disk storage medium 20 that delivers the actual service as MPEG-2 program stream PS. In order to transmit this content on the home network, a partial transport stream must be generated. Therefore, a transport stream generator 13 according to the invention is coupled to a home network interface 4 that can transmit information on the home network 6.

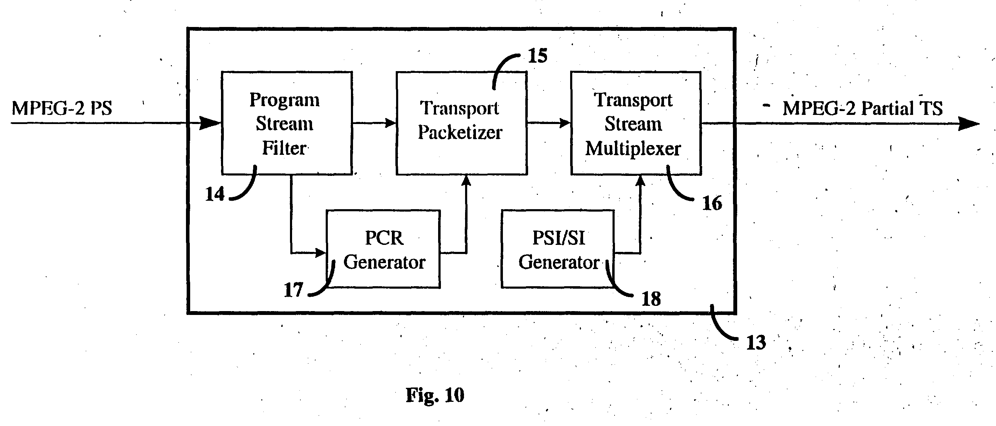

The transport stream generator 13 is shown in Figure 10. The incoming MPEG-2 program stream is fed to a program stream filter 14 that delivers outputs to a PCR generator 17 and a transport packetizer 15. The transport packetizer 15 also receives the output of the PCR generator 17 and outputs its packetized information to a transport stream multiplexer 16 which is also coupled to a PSI/SI generator 18. The transport stream multiplexer 16 than outputs the MPEG-2 partial transport stream to the home network interface 4.

The source program stream from the DVD disk consists of several component elementary streams, ES's, one video, and several audio, and subtitle streams. The high level home network protocolls decide which ES components are required to appear in the partial transport stream on the home network. Bandwidth is reserved for a width rate above that of the source program stream, high enough to accommodate packetizing and general transport overhead. The program stream filter 14 scans the source program stream and passes on to the transport packetizer 15 only those PS packets of the required components. The PS filter 14 also decodes the program stream pack headers in order to provide system clock reference values for the PCR generator 17. The transport packetizer 15 scans the incoming PS packets and splits each PS packet into 184-byte units and adds a transport packet header (MPEG-2 systems) with pre-defined PID values, and makes these transport packets available to the transport stream multiplexer 16. The transport packetizer 15 also inserts PCR values, calculated from the time-stamp values present in the MPEG-2 PS Packetised Elemantary Stream (PES) headers, into the packet stream at the required rate as defined in MPEG-2 systems. The TS multiplexer 16 inserts the PSI and SI tables required for the partial transport stream, as already described. The PAT and PMT tables are generated completely by the transport stream generator 13 entity alone, as it (or higher level software) decides the PID values to be used. Content for the SIT descriptors is taken from the relevant DVD texts. The transport stream multiplexer 16 must also monitor its output bit rate and insert stuffing packets into the outgoing partial transport stream, in order to maintain the timing characteristics of the content.

## Claims

1. Method to distribute MPEG-2 transport streams on a network, comprising the following steps:
a) receiving of one or more MPEG-2 transport stream/s (TS) including program specific information/service information (PSI/SI) tables and service packets having packet identifiers;
b) filtering the received MPEG-2 transport stream/s (TS) received in step a) to exclude program specific information/service information (PSI/SI) tables;
c) filtering the received MPEG-2 transport stream/s (TS) received in step b) to include only service packets carrying predetermined services that should be distributed on said network;
d) generating new program specific information/service information (PSI/SI) tables for the predetermined services filtered in step c);
e) inserting the tables generated in step d) into the transport stream/s (TS) received in step a) and filtered in steps b) and c) in predetermined intervals or at predetermined points of time; and
f) outputting of the partial transport (partial-TS) stream/s generated in step e) to said network.

2. Method according to claim 1, **characterized in that** said step d) of generating new program specific information/service information (PSI/SI) tables comprises the step of generating a program association table (PAT) to reference only to said predetermined services that should be distributed on said network on the basis of a program association table (PAT) of the program specific information (PSI) tables included in said MPEG-2 transport stream (TS) received in step a) and a newly calculated check sum (CRC) for a cyclic redundancy check algorithm used to validate said table.

3. Method according to claim 1 or 2, **characterized in that** said step d) of generating new program specific information/service information (PSI/SI) tables comprises the step of generating a program map table (PMT) to reference only to said predetermined services and predetermined component elementary streams that should be distributed on said network on the basis of a program map table (PMT) of the program specific information (PSI) tables included in said MPEG-2 transport stream (TS) received in step a) and a newly calculated check sum (CRC) for a cyclic redundancy check algorithm used to validate said table.

4. Method according to anyone of claims 1 to 3, **characterized in that** said step d) of generating new program specific information/service information (PSI/SI) tables comprises the step of generating a new selection information table (SIT) to reference only to said predetermined services that should be distributed on said network on the basis of a service description table (SDT) and an event information table (EIT) of the program specific information/service information (PSI/SI) tables included in said MPEG-2 transport stream (TS) received in step a) and a newly calculated check sum (CRC) for a cyclic redundancy check algorithm used to validate said table.

5. Method according to anyone of claims 1 to 4, **characterized in that** said step d) of generating new program specific information/service information (PSI/SI) tables comprises the step of generating a discontinuity information table (DIT) indicating discontinuous transition points of the program specific information/service information (PSI/SI).

6. Method according to anyone of the preceding claims, **characterized in that** said step d) of generating new program specific information/service information (PSI/SI) tables comprises the step of copying of specific tables or descriptors of the program specific information/service information (PSI/SI) tables included in said MPEG-2 transport stream (TS) received in step a).

7. Method according to anyone of the preceding claims, **characterized in that** said network is a IEEE 1394-based digital home network.

8. Interface device (1) for distributing MPEG-2 transport streams on a network, comprising:
at least one front end block (2) to respectively receive incoming broadcast services carried by a broadcast medium (5), each of which carries out a medium specific demodulation and a error correction, and outputs a MPEG-2 transport stream (TS);
a TS processor (3) connected to each of said front end block/s (2) to receive said MPEG-2 transport stream/s (TS), to select predetermined services therefrom and to output a modified MPEG-2 transport stream (partial-TS) carrying only said predetermined services and program specific information/service information (PSI/SI) tables; and
a network interface (4) connected to said TS processor (3) to receive said modified MPEG-2 transport stream/s (partial-TS) and to output it/them to a bus (6) of said network.

9. Interface device (1) according to claim 8, **characterized in that** said TS processor (3) comprises:
a PSI/SI decoder (7) receiving said MPEG-2 transport stream/s (TS) from each of said front end block/s (2) and analysing program specific information/service information (PSI/SI) tables included in said respective MPEG-2 transport stream (TS) to output relevant information about said selected services;
a PID parser (9) receiving said MPEG-2 transport stream/s (TS) from each of said front end block/s (2) and filtering the received MPEG-2 transport stream (TS) to exclude program specific information/service information (PSI/SI) tables and to include only said selected services and to respectively output a filtered transport stream (filtered-TS);
a PID processor (8) receiving said filtered transport stream/s (filtered TS) from said PID parser (9) to assign new PIDs to the selected services of the respective MPEG-2 transport stream/s such that each service and its component elementary streams have unique PIDs;
a PSI/SI generator (10) generating new program specific information/service information (PSI/SI) tables for the selected services on the basis of the relevant information output by said PSI/SI decoder (7); and
a transport packet injecter (11) storing the tables generated by said PSI/SI generator (10) and inserting them into the filtered transport stream (filtered-TS) and to output said modified MPEG-2 transport stream (partial-TS).

10. Interface device (1) according to claim 9, **characterized in that** said PSI/SI generator (10) generates program association tables (PAT), program map tables (PMT), selection information tables (SIT) that are inserted in predetermined time intervals into the filtered MPEG-2 transport stream (filtered-TS) by the transport packed injecter (11).

11. Interface device (1) according to claim 9 or 10, **characterized in that** said PSI/SI generator (10) generates discontinuity information tables (DIT) that are inserted at the beginning and at the end of each transmission into the filtered MPEG-2 transport stream (filtered-TS) by the transport packed injector (11).

12. Interface device (1) according to anyone of claims 8 to 11, **characterized in that** said network is an IEEE 1394-based digital home network.

13. Interface device for distributing MPEG-2 transport streams on a network, comprising:
a storage medium (20) delivering a MPEG-2 program stream (PS);
a TS generator (13) connected to said storage medium (20) to receive said MPEG-2 program stream (PS), to output a MPEG-2 transport stream (partial TS); and
a network interface (4) connected to said TS generator (13) to receive said MPEG-2 transport stream (partial TS) and to output it to a bus (6) of said network.

14. Interface device according to claim 13, **characterized in that** said TS generator (13) comprises:
a program stream filter (14) receiving said MPEG-2 program stream (PS) from said storage medium (20), decoding program stream pack headers out of said received MPEG-2 program stream (PS) to provide system clock reference values, and filtering the received MPEG-2 program stream (PS) to include only selected services and to output only those packets of the program stream (PS) of the required components;
a PCR generator (17) receiving said system clock reference values to output PCR values;
a transport packetizer (15) receiving said packets of the program stream (PS) of the required components from the program stream filter (14) and said PCR values from the PCR generator (17) to split each incoming program stream packet into 184-byte units and to add a transport packed header with pre-defined PID values, to generate a packet stream thereform and to add said PCR values into the packet stream at the required rate;
a PSI/SI generator (18) generating new program specific information/service information (PSI/SI) tables for the selected services of the program stream;
a transport stream multiplexer (16) storing the tables generated by said PSI/SI generator (18) and inserting them into the packet stream with inserted PCR values output by said transport packetizer (15) and to output an MPEG-2 transport stream (partial-TS).

15. Interface device according to claim 14, **characterized in that** said PSI/SI generator (10) generates program association tables (PAT), program map tables (PMT), selection information tables (SIT) that are inserted in predetermined time intervals into the packet stream with inserted PCR values by the transport stream multiplexer (16).

16. Interface device according to claim 14 or 15, **characterized in that** said PSI/SI generator (10) generates discontinuity information tables (DIT) that are inserted at the beginning and at the end of each transmission into the MPEG-2 transport stream (TS) by the transport stream multiplexer (16).

17. Interface device according to anyone of claims 13 to 16, **characterized in that** said network is a IEEE1394-based digital home network.
